# EUROPEAN PATENT SPECIFICATION

(11) **EP 0 682 871 B1**
(45) Date of publication and mention of the grant of the patent: **18.08.1999**
(21) Application number: 94914422.4
(22) Date of filing: 09.05.1994
(51) Int. Cl.: A21C 11/12

(54) **CUTTING DEVICE USED TO MAKE CUTS ON LOAVES TRANSPORTED IN CARRIAGES**
VORRICHTUNG ZUM SCHLITZEN VON BROT TRANSPORTIERT IN EINEM WAGEN
DISPOSITIF PERMETTANT D'EFFECTUER DES COUPURES SUR DES PAINS TRANSPORTES DANS DES CHARIOTS

(30) Priority: 12.05.1993 ES 9301011
(43) Date of publication of application: 22.11.1995
(73) Proprietor: BURGUET RODRIGO, Blas, 46980 Paterna (ES)
(72) Inventor: BURGUET RODRIGO, Blas, 46980 Paterna (ES)
(74) Representative: Urizar Anasagasti, José Antonio
(86) International application number: ES9400045
(87) International publication number: WO9426117

(56) References cited:
- EP-A- 0 202 181

## Description

### FIELD OF THE INVENTION

The present invention relates to a cutting device used to make cuts on loaves transported in carriages, which provides various advantages with respect to the function to which it is destined as it will be mentioned hereinbelow, in addition to other advantages inherent to its organization and constitution.

### BACKGROUND OF THE INVENTION

It is at present a known fact, that of making cuts in bread laoves placed on trays which in turn are placed on tray carrying carriages, provided with a variable number of shelves depending on the hight of the products to be baked. At present, these cuts are made manually, which implies a slow, expensive and low quality process, the cuts obtained being uniqual.

In the present prior art, automatic systems for cutting loaves of bread are also known, such as those used in bread-making factories, said systems being completely mechanized forming part of a complex process which includes a large amount of machinary and in addition require a considerable space for the place they occupy, and during which process the mankind hardly intervenes. This sytem is suitable for handling enormeous quantities of bread, not however being appropriate for work at a lower scale, such as for example in furnaces of large amount of products -but not reaching to be breadmaking factories- wherein carriages are used as carried out in the case of large surfaces and thus the use of the system of bread-making factories is not feasable for them due to the problem of space.

In order to overcome said drawback, the device object of the invention is proposed, being semi-mechanized in which the operator intervenes in different stages of the bread manufacturing process; mixing, kneading, fermentation, baking, etc.

### SUMMARY OF THE INVENTION

The applicant of the present invention has concieved a semi-automatic device for effecting cuts in bread loaves transported in carriages, parting from a simple solution, consisting in engaging the carriage inside a specific structure with its respective trays full of bread loaves, in diagonal manner by means of guides which rest on the floor in order to insert the carriage. Having engaged the carriage of bread inside the component structure of the cutting device, an electric or manual mechanism is activated which lowers some knives so that they fall upon the bread in an appropriate direction in order to perform the normal and classic type of cut on the bread, and later by pulling out the carriage with a dragging movement, the knives run along the direction for cutting said bread loaves, thus achieving to cut the bread loaves of all the trays comprised in the carriage in a short time, all of which by means of two movements: introducing and activating the knives, and later pulling out the carriage. In this operation approximately one hundred bread loaves are cut, which implies clearly a save of time and work as well as great commodity.

The device according to the present patent of invention offers the advantages described hereinabove in addition to others which would easily be deduced form the example of the embodiment of a bread cutting device, which is described more in detail hereinbelow in order to facilitate the understanding of the of the features exposed above, disclosing at the same time different details, and for such a purpose a number of drawings are accompanied to the present specification, in which only as example and not limiting the scope of the present invention, a practical case of the object of the same is represented.

### BRIEF DESCRIPTION OF DRAWINGS

In said figures;

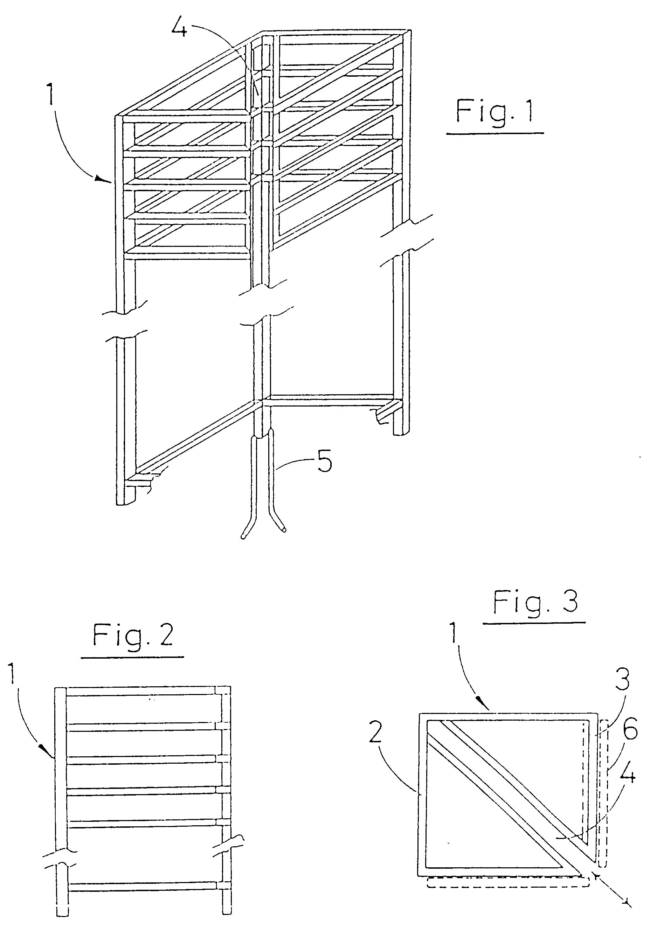

Figure 1 is a perspective of the device object of the present patent of invention.
Figures 2 and 3 correspond to two views of the device, in elevation and upper plan.
Figure 4 shows the movement of falling the knives over the bread loaves.
Figure 5 shows a detail of the device in which the knife-carrying axis and a scheme of the activating movement are observed.
Figure 6 is a plan schematic view of the device in which the trajectory of the knives over the bread loaves as a result of the movements of entring and going out of the carriage is represented.

### DESCRIPTION OF AN EMBODIMENT ACCORDING TO THE INVENTION

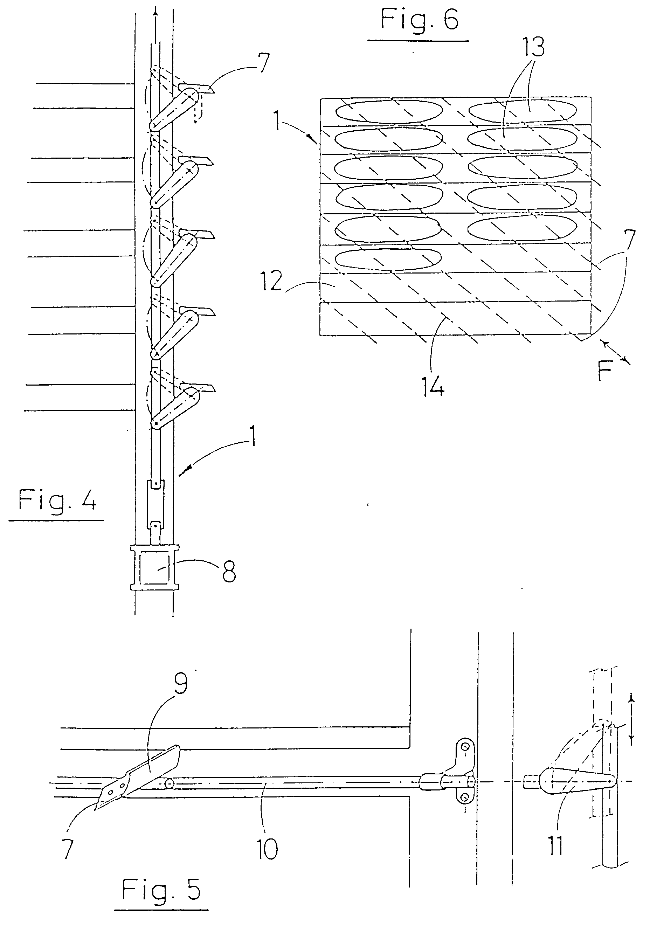

According to the representation of the drawings, the device proposed is constituted by a prismatic frame, designated generally by -1-, which is engageable to any corner of the oven or work establishment, admitting the possibility of being manufactured in a collapsible or dismountable structure for a better utility with the objective of eliminating problems of space. The mentioned prismatic structure is basically constituted by two "L" shaped pieces, -2- and -3-, facing each other by their larger side, from which an opening -4- is formed in a diagonal direction which determines the direction of entring and going out of the tray-carrying carriage with the bread loaves therein. The frame -1-, incorporates guides or tracks -5-, for the entrance and going out of the carriage. By means of broaken lines -6-, the interior and exterior places intended for knives -7- are indicated, and the falling movement of the latter over the bread is shown in figure 4 in which case said movement is obtained by electric means.

In figure 5 the knife -7- is shown with the support -9- thereof, and knife-carrier axis -10-, as well as the manual activating handle -11- in a separate scheme.

Figure 6 shows the frame -1- schematically observed in plan view; the knives -7-; the trays -12-, bread laof carriers -13- and the inward and outward direction of the tray carrier carriage is designated by "F", while the broaken lines -14- indicate the cutting trajectory performed on the bread loaves.

## Claims

1. Cutting device used to make cuts on loaves transported in carriages, characterized in being constituted by a prismatic frame (1), composed by metalic pillars in relation to also metalic cross-bars, which define as many levels as there are trays in the bread carrying carriage, said cross-bars forming two "L" shaped structures, (2) and (3) facing each other by their larger side, so as to form an opening (4) along a diagonal plane which defines an access for entring and corresponding going out of the carriage, said frame (1) incorporating a number of tracks (5) for a guided displacement of the carriage, and said frame (1) having on the cross-bars adjacent to the opening (4) a number of articulated knives (7) susceptible of adopting an inoperative elevated position and a functional lowered position which is acceded to by means of electromechanical or manual means, said knives (7) being in charge or performing the cuts on the bread loaves in combination with the outward movement of the carriage for the interior of the frame (1).

## Patentansprüche

1. Brotschneidegerät, das auf Fahrgestellen transportiert wird, dadurch gekennzeichnet, dass es aus einem prismatischen Rahmen(1) besteht, der aus Metallstützen und Querstreben, die ebenfalls aus Metall sind, zusammengesetzt ist und mit diesen in Beziehung steht, welche sowohl den Behälterstand als auch die Auffangschalen bestimmen, über die das Brotschneidegerät verfügt, dessen Querleisten zwei "L"-Formen (2) und (3) aufweisen, die sich auf ihrer höheren Seite gegenüberliegen um eine Öffnung (4) zu bilden, entsprechend einer diagonalen Oberfläche, die einen Zutritt für den Eingang und auch den Ausgang des Fahrgestells herstellt, wobei besagter Rahmen (1), einige Laufschienen (5) für die gesteuerte Fortbewegung des Wagens mit einbezieht und der Rahmen (1) in den Querstreben, die an die Öffnung (4) angrenzen über einige Gelenkmesser (7) verfügt, die in der Lage sind, eine erhöhte inaktive Stellung und eine Funktionsstellung im unteren Bereich , die man auf elektromechanische Weise erreicht, einzunehmen, wobei besagte Messer (7) die Aufgabe haben, die Brote beim Herausfahren des Fahrgestells aus dem Inneren des Rahmens (1) , zu schneiden.

## Revendications

1. Dispositif coupeur de pain transporté par des chariots, caracterisé en ce qu'il est contitué par un châssis prismatique (1), composé par des aiguilles métalliques reliées par des traverses aussi métalliques, définant tant de niveaux que de plateaux dispose le chariot transporteur de pain, dont ses traverses configurent deux formes en "L", (2) et (3), opposées par leur plus grands côtés, pour construire une ouverture (4), selon un plan diagonal, ce qui établie un accès pour l'entrée et la correpondante sortie du chariot, incorporant ledit châssis (1) des rails (5) pour le coulissage guidé du chariot, et disposant le châssis (1), dans les traverses adjacentes a l'ouverture (4), par des couteaux (7) articulés, susceptibles d'adopter une position en haut inopérante et une position en bas fonctionnelle, à laquelle s'accède par des moyens électromécaniques ou manuels, étant lesdit coutaux (7), chargés de faire les coupes aux pains en combinaison avec les mouvements d'extraction du chariot de l'interieur du châssis (1).
